# EUROPEAN PATENT SPECIFICATION

(11) **EP 2 164 674 B1**
(45) Date of publication and mention of the grant of the patent: **25.01.2017**
(21) Application number: 07790165.0
(22) Date of filing: 18.06.2007
(51) Int. Cl.: B23K 26/38, F16K 17/16

(54) **METHOD FOR PRODUCTION OF SAFETY /RUPTURE DISCS HAVING PRE-CALCULATED BREAKING THRESHOLD**
VERFAHREN ZUR HERSTELLUNG VON SICHERHEITS/ BERSTSCHEIBEN MIT VORBERECHNETER BRUCHSCHWELLE
PROCÉDÉ DE PRODUCTION DE DISQUES DE SÛRETÉ /RUPTURE PRÉSENTANT UN SEUIL DE RUPTURE PRÉ-CALCULÉ

(43) Date of publication of application: 24.03.2010
(73) Proprietor: Donadon Safety Discs and Devices S.R.L., 20011 Corbetta (MI) (IT)
(72) Inventor: MODENA, Mario, 20149 Milano (IT); DONADON, Antonio Ruggero Sante, 20019 Settimo Milanese (Milano) (IT)
(74) Representative: Tarabbia, Luigi
(86) International application number: PCT/IT2007/000433
(87) International publication number: WO 2008/155783

(56) References cited:
- EP-A- 0 867 648
- EP-A- 1 591 703
- GB-A- 2 201 464
- US-A- 5 058 413
- US-A1- 2006 237 457

## Description

The present invention relates to a method for production of safety/rupture discs having a pre-calculated breaking threshold (see for example CA 1 304 650).

In particular, the present invention is advantageously used in producing devices applied to plants along pneumatic or hydraulic lines to ensure the necessary safety measures of the plant itself which can be submitted to conditions different from the design ones.

More specifically, such devices are applied to emergency lines to fully close the duct on which they are applied.

A high-pressure fluid acts in one of the half-spaces defined by the device, while the opposite half-space is acted upon by a lower pressure, typically the atmospheric one.

Alternatively, the safety devices of known type can protect plants operating at sub-atmospheric pressure. In this case too, the device is submitted to a pressure difference acting between the two opposite faces of same.

When the difference between the pressure acting inside the plant and the external pressure exceeds a value of pre-calculated safety threshold, this device opens by tearing and allows the fluid under pressure to go beyond the safety device so as to flow out of the plant. In this manner, a possible and undesirable pressure excess is not able to damage other parts of the plant.

In case of plants operating at a sub-atmospheric pressure, rupture of the safety device enables the fluid under atmospheric pressure to flow into the plant.

Typically, the safety devices to which reference is made have a disc-shaped configuration with a surface on which the fluid under pressure acts, which surface can be flat, concave or convex.

Alternatively, said devices have a square or rectangular shape depending on the duct onto which they have to be applied.

The devices that do not have any frangible line of pre-established rupture, open in a non-definite manner with possible separation of some parts. For this reason, in many cases preferably devices with frangible lines of pre-established rupture are used, which lines can be obtained with notches or cuts of various shapes, which can be through cuts or not. In the case of through cuts a second continuous layer, weaker than the calibrated section is necessary, to ensure pneumatic and/or hydraulic tightness. When there are no through cuts this is not required.

At all events, these devices can have a plurality of non-through cuts disposed on a surface of the device in a suitable configuration so as to define corresponding frangible lines of pre-established rupture.

In other words, when overcoming of the threshold value of the fluid pressure occurs, the safety device tears at said frangible lines of pre-established rupture.

In the methods for producing these devices, particular attention must be paid exactly to the execution of said cuts in terms of depth, length and width, but also as regards maintenance of the mechanical features of the device material close to the cuts. In particular, it is necessary for this material to keep its crystalline-metallurgic structure unchanged.

In fact, the cut sizes are selected as a function of the value of the pre-established pressure threshold to which the device must break. Undesirable mechanical alterations and/or alterations in the crystalline structure that on the other hand can be hardly evaluated, can modify this threshold value. In this manner, the safety device starts operating before or after achievement of this value.

In known production methods, cuts are mainly made mechanically. In particular, cuts can be made by permanent set through use of punches and related counter-punches or moulds and counter-moulds.

Alternatively, cuts are made by micro-milling. In other words, a portion of the material is mechanically removed with great accuracy.

The described methods at all events involve use of tools coming into contact with the mentioned safety device.

First of all, this type of working imposes reduced work speeds. In addition, similar production method are expensive, without on the other end ensuring excellent accuracy levels.

Finally, the direct contact between the tools required for working, and the device involves gradual decay of the tools that must be reground and/or replaced bringing about, as a result, production stops and impairing constancy in the devices produced at a later time. All that obviously affects costs and production.

To at least partly obviate the mentioned drawbacks, cutting methods are known that use a laser beam. In this type of method described in the US Patent Application No. 2006/0237457, the device is previously covered with a layer of protective material. In this case, the laser beam traces the lines to be cut directly in the protective layer and not in the metal. The cuts are then actually made by' an electrical-polishing process. Removal of the metal material takes place by an electrolytic method (electrical polishing). Finally, the protective material layer is removed.

However, this type of working involves very long work times and high production costs due to the indispensable requirement of applying and removing the protective layer.

In this context, the technical task of the present invention is to provide a method for production of a safety device with pre-calculated breaking threshold that is devoid of the mentioned drawbacks.

In particular, it is an aim of the present invention to propose a method for production of safety devices with pre-calculated breaking threshold that can be obtained in a quick and cheap manner.

It is a further aim of the present invention to propose a method for production of safety devices with pre-calculated breaking threshold that is flexible and can be adapted to different requirements in terms of type of material used and sizes of the device.

The technical task mentioned and the aims specified are substantially achieved by a method for production of safety devices with a pre-calculated breaking threshold as set out in claim 1.

The dependent claims describe further embodiments of the invention.

Further features and advantages of the present invention will become more apparent from the detailed description of a preferred but not exclusive embodiment of a method for production of safety devices with a pre-calculated breaking threshold given by way of nonlimiting example and as shown in the accompanying drawings, in which:
- Fig. 1 is a perspective view of a safety device made by a method in accordance with the present invention;
- Fig. 2 represents a section view of the device seen in Fig. 1 taken along line II-II;
- Fig. 3 represents a perspective view of a first alternative embodiment of the device in Fig. 1;
- Fig. 4 is a section view of the device in Fig. 3 taken along line IV-IV;
- Fig. 5 is a perspective view of a second alternative embodiment of the device in Fig. 1;
- Fig. 6 is a section view of the device in Fig. 5 taken along line VI-VI;
- Fig. 7 is a perspective view of a third.embodiment of the device in Fig. 1; and
- Fig. 8 is a section view of the device in Fig. 7 taken along line VIII-VIII.

With reference to the drawings, a safety device with pre-calculated breaking threshold made following a method in accordance with the invention has been generally identified with 1.

The safety device 1 is mounted in pneumatic or hydraulic plants along safety ducts. In particular, the safety device. 1 fully closes the port of the duct onto which it is applied and comprises a first surface 1a on which a fluid under pressure acts and a second surface 1b on which a pressure of the external environment acts. Generally, this pressure is the atmospheric one.

Should the fluid acting on the first surface 1a have a higher pressure than a threshold value, the safety device 1 will open by tearing so as to enable transit of the fluid in the safety duct and allow discharge of an excess pressure into an external environment.

Likewise, should the plant operate at a subatmospheric pressure, the safety device 1 will start working when the vacuum acting on surface 1a is too high. In this way, the safety device 1 prevents sudden pressure changes beyond the design limits from' giving rise to breaking and/or failures in other components of the plant.

The safety device 1 comprises a plate 2 that can have different shapes depending on the shape of the duct onto which it has to be applied. In particular, plate 2 can be either of a substantially disc-shaped conformation (as shown in the drawings) or of a rectangular or square shape.

Plate 2 comprises a peripheral portion 3 defining a coupling flange with a duct and a central portion 4 designed to open when the pressure threshold value is exceeded.

The safety device 1 further comprises at least one notch or cut 5 formed in a metallic surface 2a of plate 2 along a working line.

In the described embodiments, the safety device 1 comprises four cuts 5 of rectilinear shape disposed in an axially symmetric configuration. However, the number, shape and arrangement can vary depending on the operating requirements.

In the examples shown, cuts 5 are formed in the.second surface 2b of the safety device 1, i.e. on the surface on which the pressure of the surrounding environment acts.

Cuts 5 can also be formed on the first surface 2a of the safety device 1, i.e. on the surface acted upon by the fluid under pressure.

Plate 2 is made of metal material, such as stainless steel, nickel, aluminium or other metals or particular metal alloys.

Advantageously, the safety device 1 further comprises at least one breaking initiation region 6 that is placed close to the centre of plate 2. This breaking initiation region 6 comprises a portion of plate 2 marked by a plate thickness lower than an average thickness of the whole plate 2 or by a region in which the plate 2 structure is weakened by effect of localised heating.

In particular, in safety devices 1 of the reverse type (to be illustrated in detail later on), the breaking initiation region 6 appears as a weakening region from which the breaking process starts with overturning of the convex portion.

The safety device 1 may comprise a plurality of breaking initiation regions 6 located at each cut 5. The breaking initiation region 6 can be formed on the first surface 2a of the safety device 1 or on the second surface 2b thereof. Alternatively, a plurality of breaking initiation regions 6 can be formed both on the first 1a and on the second 1b surfaces.'

In the embodiments shown, the safety device 1 comprises a single breaking initiation region 6 located close to the plate centre.

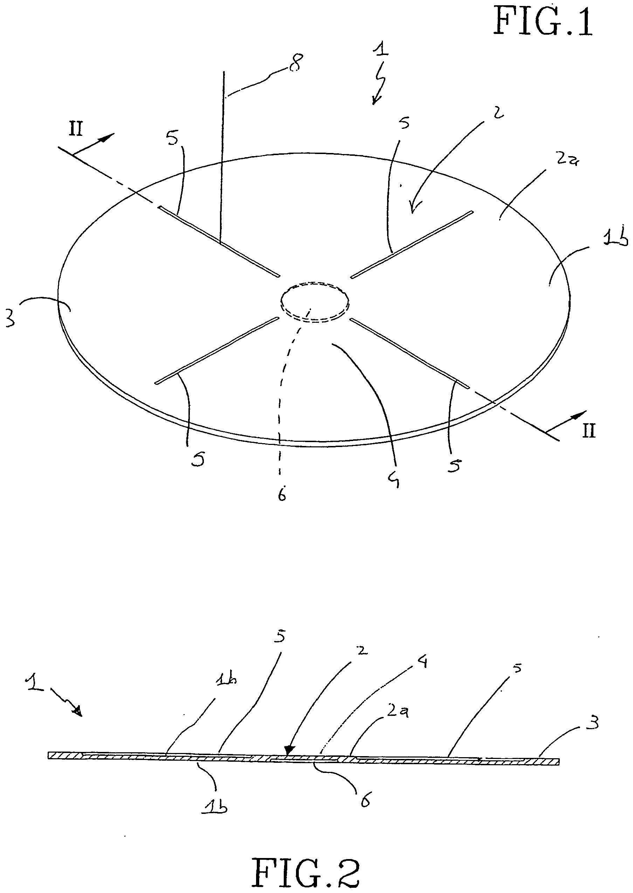

The safety device 1 can be such shaped that the peripheral portion 3 and central portion 4 are in coplanar relationship (Figs. 1 and 2).

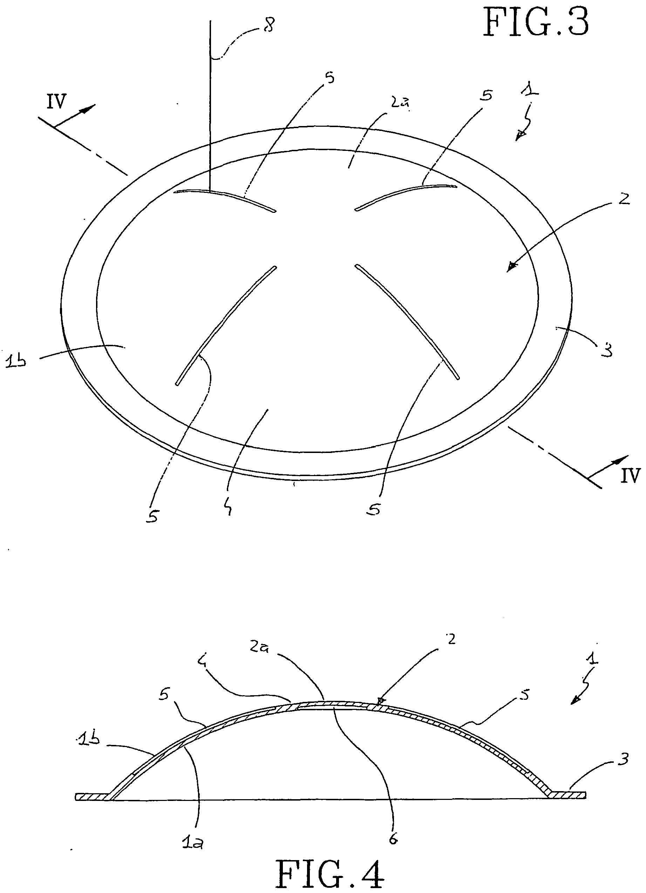

In a first alternative embodiment (Figs. 3 and 4), the central portion 4 has an arched-section shape so that the first surface 2a of the safety device 1 has a concavity facing the half-space where the fluid under pressure acts and the second surface 2b of the safety device 1 has a convexity facing the half-space where the pressure of the external environment acts. Therefore, in the flat safety device 1 (shown in Figs. 1 and 2) and in that with an arched central portion 4 (shown in Figs. 3 and 4) pressure acts in such a manner that the central portion 4 of plate 2 works by traction.

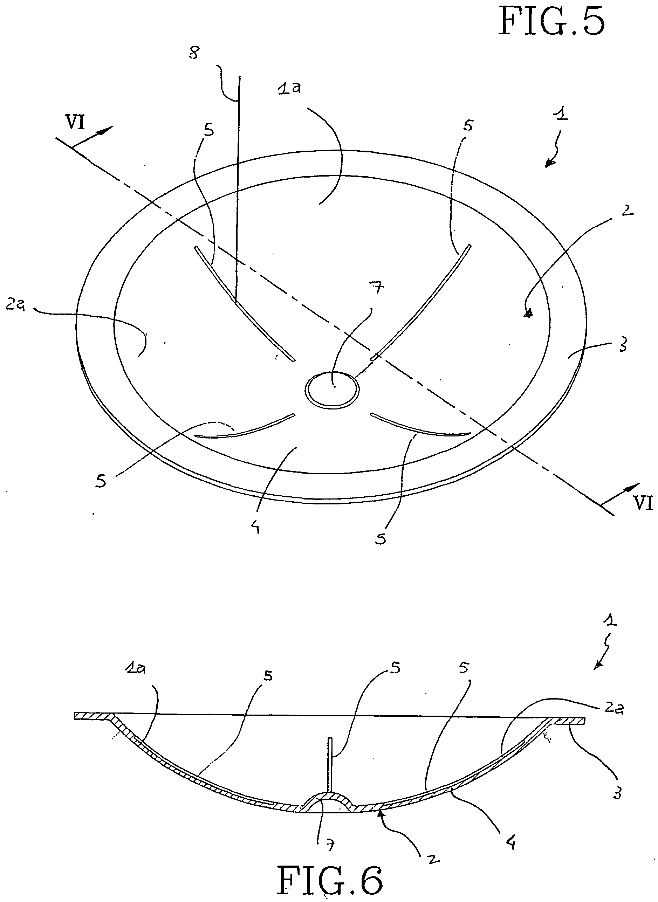

Shown in Figs. 5 to 8 is a safety device 1 of the reverse type. In this alternative embodiment, the central portion 4 has an arched-section shape in such a manner that the first surface 2a of the safety device 1 has a convexity facing the half-space where the fluid under pressure acts and the second surface 2b of the safety device 1 has a concavity facing the half-space where the pressure of the external environment acts.

In the safety device 1 shown in Figs. 5 and 6, pressure acts in such a manner that the central portion 4 of plate 2 works by compression.

The device 1 of the reverse type is particularly adapted for use when the acting pressure varies in a cyclic manner because the cyclic stresses do not give rise to modifications in the crystalline-metallurgic structure, due to fatigue.

The safety devices 1 of the reverse type can comprise a plurality of radial cuts disposed axially symmetric (Figs. 5 and 6). These cuts 5 are made in the first 2a or the second 2b surfaces of the safety device 1. Alternatively, cuts 5 can be formed in both surfaces.

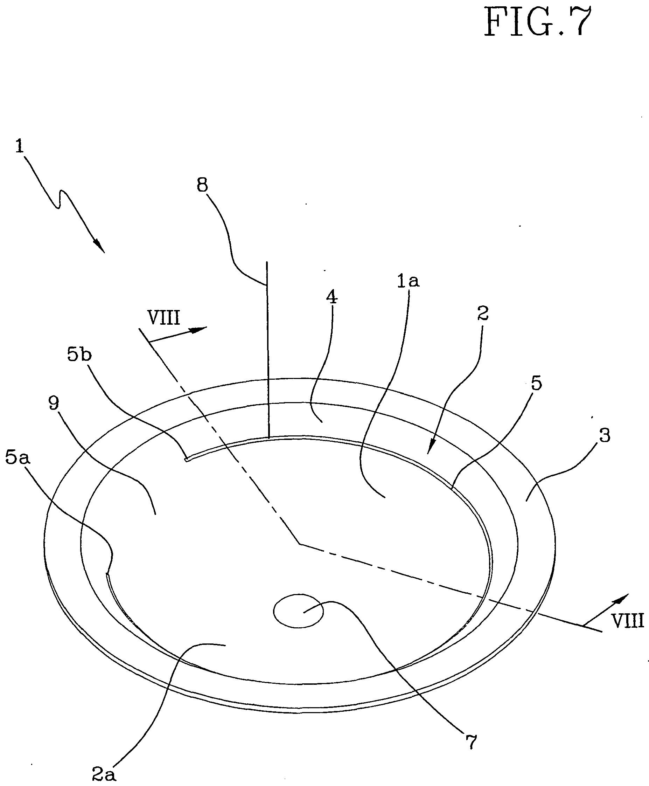

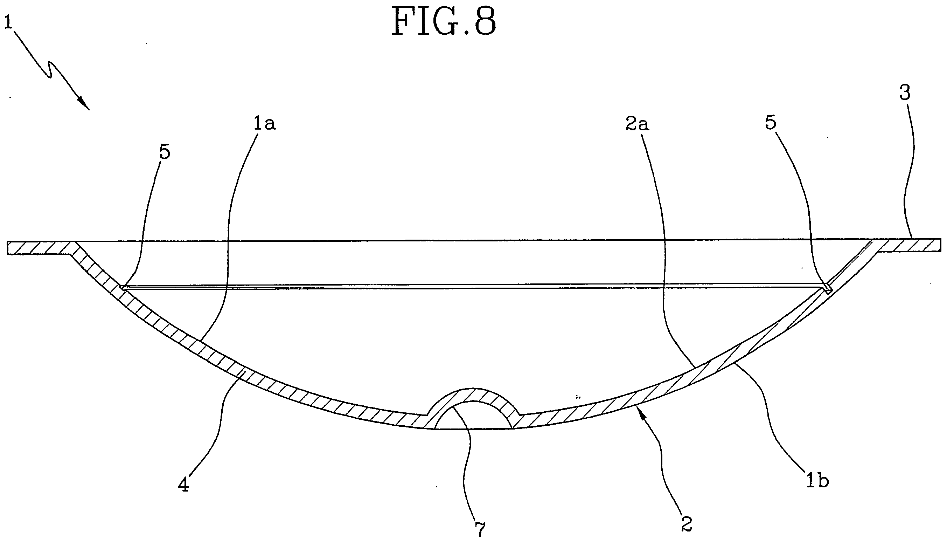

Advantageously, the safety devices 1 of the reverse type comprise a peripheral cut 5 preferably in the form of an arc of a circle and disposed close to the periphery of the central portion 4 of plate 2 (Figs. 7 and 8).

In this case, the peripheral cut 5 has a first 5a and a second 5b ends facing each other. In addition a connecting region 9 is defined between said ends. Said connecting region 9 is disposed close to the periphery of the central portion 4 of plate 2 where the only cut 5 is interrupted. In other words, the peripheral cut 5 originates from the connecting region 9, extends along the periphery of the central portion 4 and terminates close to the connecting region 9 itself.

This connecting region 9 has the task .of retaining the torn portion of plate 2 once the pressure threshold limit has been reached and exceeded. In this way, there is no full separation of the torn portion from the safety device 1.

Advantageously, this connecting region 9 can be reinforced, by thickening of plate 2 for example (not shown).

In this case the depth of the peripheral cut 5 varies and increases on moving away from said ends 5a, 4b of the peripheral cut 5. In other words, the peripheral-cut depth increases from the connecting region 9 where it is minimum, to a region diametrically opposite to the connecting region 9 itself, where it is maximum (Fig. 8).

In this manner, where the depth of the only cut 5 is maximum (i.e. in said region diametrically opposite to the connecting region 9) the breaking process can start with easy (once the pressure threshold value has been overcome and overturning of the concavity has been carried out). The breaking process extends along the peripheral cut 5 until reaching the connecting region 9, at both stretches of the peripheral cut 5. On moving close to the connecting region 9, the breaking process is hindered by the reduction in the peripheral cut 5 depth.

Advantageously, this helps in avoiding full separation of the broken portion from the safety device 1.

In safety devices 1 of the reverse type, a region 7 of deformation initiation may be advantageously present. In fact, this type of device is deformed before tearing by the excess pressure, until overturning of its concavity is caused. Only after this step, the safety device 1 opens by tearing.

The region 7 of deformation initiation can include a region of the central portion 4 of plate 2 which is locally provided with a concavity opposite to that of plate 2. In other words, this region 7 of deformation initiation has a concavity facing the half-space where the fluid under pressure acts.

This region 7 of deformation initiation is preferably located centrally in plate 2 or close to said centre.

The method for production or une safety device 1 takes place by providing plate 2 having said metallic surface 2a.

Should it be necessary to obtain a safety device 1 of curved conformation, it is therefore necessary to deform the central portion 4 of plate 2 by pressing, for example. Preferably, this step is' preliminary to a step of forming cuts 5.

Formation of cuts 5 takes place by applying a laser beam 8 directly onto said metallic surface 2a. In other words, the laser beam 8 generated by a suitable source is directed against this metallic surface 2a and a tiny portion of plate 2 is removed by ablation, or by melting and sublimation.

By way of example, the laser source used can be a neodymium vanadium crystal source or a source of another type.

Advantageously, the power applied to plate. 2 by the laser beam is included between 10 and 80 W, preferably between 20 and 60 W, most preferably between 35 and 45 W; an average power is substantially as high as 40 W, for example.

Application of laser beams with lower powers is not able to ensure an efficient formation of cuts 5. In fact, too low a pressure imposes many passages of the laser beam along the line of pre-established rupture to be defined and makes the process heavy in terms of execution time.

On the contrary, use of a laser radiation of higher power than the above defined range gives rise to formation of through cuts and/or substantial modification of the crystalline-metallurgic features, which will bring about unpredictability in the metal behaviour. In this case, it is not possible to ensure achievement of a safety device 12 with' a foreseeable and reproducible breaking threshold.

The laser beam 8 used has a wavelength included between 1000 and 1100 nm. Preferably, this wavelength is substantially of 1064 nm.

The laser beam 8 used is advantageously of the pulsed type in order to enable power transfer to plate 2 in an efficient manner. Preferably, the pulse duration is included between 10 and 80 ns.

In this way, burning, oxidation and alteration in the metallurgic metal structure are avoided.

The method also contemplates carrying out of a plurality of passages of the laser beam at the frangible line to be defined.

Consequently, cuts 5 with very precise depth and width can be defined which are reproducible but can vary depending on the number of the passages carried out.

In addition, the first passage of the laser -beam 8 makes the frangible line being defined dull, and eliminates the reflection problems of the laser beam 8 of the following passages.

The displacement speed of the laser beam 8 along the metallic surface 2a varies between 100 and 300 mm/s, preferably between 150 and 250 mm/s. Preferably this transfer speed is of 200 mm/s.

It is to be noted that the upper limit of the speed range of the above mentioned passage is substantially dictated by mechanical limits.

On the contrary, the lower limit of this range is very important because too reduced passage speeds give rise to overheating of plate 2 which may also bring about variations in the mechanical features of plate 2 and impair the working reproducibility.

Associated with use of laser radiation there is the further possibility of making cuts 5 with varying depth and/or with along the cut length by varying the power emitted by the laser beam 8 during the subsequent passages.

It is also possible to vary the depth and/or width of cuts 5 by varying the number of passages and/or the displacement speed and/or the stroke of the laser beam 8.

In particular, the above enables creation of cuts 5 the depth of which decreases from the centre to the periphery of the safety device 1 to facilitate opening of the safety device 1 and limit the risk of torn parts of the device being detached.

Likewise, by suitably modulating power and pulse of the laser beam 8, a single cut 5 of a varying depth can be made in accordance with the embodiment described in Figs. 7 and 8.

The regions of breaking initiation 6 too (shown in Figs. 1 and 3) can be advantageously created by laser radiation. In particular, the laser beam 8 can remove a portion of a varying depth between and 50 microns and a diameter included between 1 and 100 mm.

Due to the great accuracy and reproducibility in creating the breaking initiation region 6, calibration of the threshold value beyond which opening by tearing of the safety device 1 occurs is also very accurate.

The step of creating the region 7 of deformation initiation is advantageously obtained by laser radiation as well. This laser radiation is conveyed onto plate 2 which is such shaped that its convexity is turned towards the fluid under pressure. Preferably, the radiation is conveyed close to the centre of plate 2.

Creation of the region 7 of deformation initiation takes place by heating through laser radiation and permanent set by gravity, radiation pressure, punches or other techniques.

Alternatively, this region 7 of deformation initiation is made by modification of the crystalline-metallurgic structure due to the only thermal variation induced by laser radiation.

In the safety device 1, cut 5 with a varying depth can also be made using other methods in accordance with particular current requirements.

By way of example, in the following some features of a safety device 1 made by the described method are given.

Plate 2 is of circular shape, is made of nickel and has four radial cuts. The original average thickness of plate 2 is 0.4 mm. The cuts were obtained by a pulsed laser beam 8 with an average power of 40 W and a frequency of 40 kHz. The passage speed is 200 mm/s and five passages for each cut 5 were made. Cuts 5 have a depth of 25 microns and a width of 70 microns and were made in a work time of 7.5 seconds.

The invention achieves the intended purposes and has important advantages.

First of all, use of the laser beam 8 suitably optimised in accordance with the above description enables a method for cheap and quick production of safety/rupture devices having a pre-calculated breaking threshold to be obtained.

In addition, no tools are to be applied directly in contact with plate 2. Therefore there is no need for tools being replaced or reground, which brings about an important time and money saving.

Advantageously, the described method, enables safety devices 1 to be made which have constant and easily reproducible features.

In addition, the described method can be easily adapted to all requirements in terms of geometry and sizes of the cuts.

## Claims

1. A method for production of safety rupture devices with pre-calculated breaking threshold, comprising the steps of:
- providing a plate (2) having at least one metallic surface (2a);
- making at least one non-through cut or notch (5) on said surface (2a) of said plate (2) to define a frangible line of pre-established rupture; **characterised in that** said step of making at least one non-through cut or notch (5) is obtained by application of a laser beam (8) of pulsed type directly onto said metallic surface (2a) and wherein the time of each pulse being included between 10 and 80 ns.

2. A method as claimed in claim 1, wherein said laser beam (8) has an average power included between 10 and 80 W, preferably between 20 and 60 W, most preferably between 35 and 45 W.

3. A method as claimed in claim 1 or 2, wherein said step of applying said laser beam (8) comprises the step of carrying out at least one passage of said laser beam (8) on said surface (2a) along a working line.

4. A method as claimed in claim 3, wherein said step of applying said laser beam (8) comprises the step of carrying out a plurality of passages of said laser beam (8) on said surface (2a) along said working line.

5. A method as claimed in claim 3 or 4, wherein the step of carrying out said passage of said laser beam (8) is obtained by moving said laser beam (8) at a speed included between 50 and 300 mm/s, preferably between 100 and 250 mm/s.

6. A method as claimed in anyone of the preceding claims, further comprising the step of making a plurality of non-through cut or notch (5) in said metallic surface (2a).

7. A method as claimed in anyone of the preceding claims, wherein said laser beam (8) has a wavelength included between 1000 and 1100 nm, said wavelength being preferably between 1047 and 1064 nm.

8. A method as claimed in anyone of the preceding claims, wherein the power and/or number of passages and/or pulse duration and/or displacement speed and/or stroke of the laser beam (8) vary during the step of carrying out said at least one cut (5) in order to vary the cut depth.

9. A method as claimed in anyone of the preceding claims, wherein the step of providing said plate (2) comprises the step of curving said plate (2) so as to obtain a concave or convex conformation; said step of curving said plate (2) being preferably carried out before the step of making said non-through cut or notch (5).

10. A method as claimed in anyone of the preceding claims, further comprising the step of creating a region of deformation initiation (7), preferably close to the centre of the plate (2).

11. A method as claimed in claim 10, wherein said step of creating the region (7) of deformation initiation is obtained by locally reversing the concavity of the plate (2).

12. A method as claimed in claim 11, wherein the step of locally reversing the concavity of the plate (2) is obtained by applying a laser radiation close to the centre of the plate (2) so as to deform said region.

13. A method as claimed in claim 10, wherein said step of creating the region of deformation initiation (7) is obtained by locally modifying the crystalline structure and/or thickness of said plate (2).

14. A method as claimed in anyone of the preceding claims, further comprising a step of creating at least one breaking initiation region (6) placed at said at least one non-through cut or notch (5); said breaking initiation region (6) comprising a portion of the plate having a smaller thickness than the average thickness of the plate (2).

15. A method as claimed in claim 10, wherein said step of creating at least one breaking initiation region (6) is obtained by removing a portion of the plate (2) by laser radiation.

16. A method as claimed in anyone of the preceding claims, wherein said peripheral cut (5) is preferably shaped like an arc of a circle and is made at the periphery of a central portion (4) of said plate (2); said non-through cut or notch (5) having a first (5a) and a second (5b) ends facing each other.

17. A method as claimed in claim 16, wherein said non-through cut or notch (5) has an increasing depth on moving away from said first (5a) and second (5b) ends.

## Patentansprüche

1. Verfahren zum Herstellen von Sicherheits-/Berstvorrichtungen mit vorberechneter Bruchschwelle, umfassend folgende Schritte:
- Bereitstellen einer Platte (2), aufweisend mindestens eine Metalloberfläche (2a);
- Herstellen von mindestens einem nicht durchführenden Schnitt oder einer Kerbe (5) auf der Oberfläche (2a) der Platte (2), um eine brechbare Linie für einen vorgegebenen Bruch zu definieren,
**dadurch gekennzeichnet, dass** der Schritt zum Herstellen von mindestens einem nicht durchführenden Schnitt oder einer Kerbe (5) durch Anwendung eines Laserstrahls (8) vom pulsierenden Typ direkt auf die Metalloberfläche (2a) erhalten wird, wobei die Dauer eines jeden Impulses zwischen 10 und 80 ns beträgt.

2. Verfahren nach Anspruch 1, wobei der Laserstrahl (8) eine durchschnittliche Leistung von 10 bis 80 W, vorzugsweise zwischen 20 und 60 W und noch besser zwischen 35 und 45 W aufweist.

3. Verfahren nach Anspruch 1 oder 2, wobei der Schritt zum Anwenden des Laserstrahls (8) den Schritt zum Ausführen mindestens eines Durchgangs des Laserstrahls (8) auf der Oberfläche (2a) entlang einer Arbeitslinie umfasst.

4. Verfahren nach Anspruch 3, wobei der Schritt zum Anwenden des Laserstrahls (8) den Schritt zum Ausführen einer Vielzahl an Durchgängen des Laserstrahls (8) auf der Oberfläche (2a) entlang der Arbeitslinie umfasst.

5. Verfahren nach Anspruch 3 oder 4, wobei der Schritt zum Ausführen des Durchgangs des Laserstrahls (8) erhalten wird, indem der Laserstrahl (8) bei einer Geschwindigkeit von 50 bis 300 mm/s bewegt wird, vorzugsweise von 100 bis 250 mm/s.

6. Verfahren nach einem der vorhergehenden Ansprüche, zudem umfassend den Schritt zum Herstellen einer Vielzahl an nicht durchführenden Schnitten oder Kerben (5) in der Metalloberfläche (2a).

7. Verfahren nach einem der vorhergehenden Ansprüche, wobei der Laserstrahl (8) eine Wellenlänge zwischen 1000 und 1100 nm aufweist, wobei die Wellenlänge vorzugsweise zwischen 1047 und 1064 nm beträgt.

8. Verfahren nach einem der vorhergehenden Ansprüche, wobei die Leistung und/oder die Zahl der Durchgänge und/oder die Impulsdauer und/oder die Verschiebungsgeschwindigkeit und/oder der Hub des Laserstrahls (8) während des Schritts zum Ausführen des mindestens einen Schnitts (5) variieren, um die Schnitttiefe zu variieren.

9. Verfahren nach einem der vorhergehenden Ansprüche, wobei der Schritt zum Bereitstellen der Platte (2) den Schritt zum Krümmen der Platte (2) umfasst, um eine konkave oder konvexe Beschaffenheit zu erhalten, wobei der Schritt zum Krümmen der Platte (2) vorzugsweise vor dem Schritt zum Herstellen des nicht durchführenden Schnitts oder der Kerbe (5) ausgeführt wird.

10. Verfahren nach einem der vorhergehenden Ansprüche, zudem umfassend den Schritt zum Schaffen einer Region der Verformungseinleitung (7), vorzugsweise in der Nähe der Mitte der Platte (2).

11. Verfahren nach Anspruch 10, wobei der Schritt zum Schaffen der Region (7) der Verformungseinleitung erhalten wird, indem die Wölbung der Platte (2) lokal reversiert wird.

12. Verfahren nach Anspruch 11, wobei der Schritt des lokalen Reversierens der Wölbung der Platte (2) erhalten wird, indem eine Laserstrahlung in der Nähe der Mitte der Platte (2) angewandt wird, sodass die Region verformt wird.

13. Verfahren nach Anspruch 10, wobei der Schritt zum Schaffen der Region der Verformungseinleitung (7) erhalten wird, indem die kristalline Struktur und/oder die Dicke der Platte (2) lokal verändert werden.

14. Verfahren nach einem der vorhergehenden Ansprüche, zudem umfassend einen Schritt zum Schaffen von mindestens einer Brucheinleitungsregion (6), die an dem mindestens einen nicht durchführenden Schnitt oder der Kerbe (5) platziert ist, wobei die Brucheinleitungsregion (6) einen Abschnitt der Platte umfasst, der eine geringere Dicke als die durchschnittliche Dicke der Platte (2) aufweist.

15. Verfahren nach Anspruch 10, wobei der Schritt zum Schaffen von mindestens einer Brucheinleitungsregion (6) erhalten wird, indem ein Abschnitt der Platte (2) durch Laserstrahlung entfernt wird.

16. Verfahren nach einem der vorhergehenden Ansprüche, wobei der umfangseitige Schnitt (5) vorzugsweise wie ein Kreisbogen geformt und an der Umfangseite eines mittigen Abschnitts (4) der Platte (2) ausgebildet ist, wobei der nicht durchführende Schnitt oder die Kerbe (5) ein erstes (5a) und ein zweites (5b) Ende aufweisen, die einander zugewandt sind.

17. Verfahren nach Anspruch 16, wobei die Tiefe des nicht durchführenden Schnitts oder der Kerbe (5) zunimmt, je weiter sich diese(r) vom ersten (5a) und vom zweiten (5b) Ende wegbewegt.

## Revendications

1. Procédé de production de dispositifs de sûreté / rupture présentant un seuil de rupture pré-calculé, comprenant les étapes de :
- prévoir une plaque (2) comportant au moins une surface métallique (2a) ;
- réaliser au moins une coupe non traversante ou encoche (5) sur ladite surface (2a) de ladite plaque (2) pour définir une ligne de sûreté de rupture prédéfinie ;
**caractérisé en ce que** ladite étape consistant à réaliser au moins une coupe non traversante ou encoche (5) est obtenue par l'application d'un faisceau laser (8) à impulsions directement sur ladite surface métallique (2a) et dans lequel la durée de chaque impulsion est comprise entre 10 et 80 ns.

2. Procédé selon la revendication 1, dans lequel ledit faisceau laser (8) possède une puissance moyenne comprise entre 10 et 80 W, de préférence entre 20 et 60 W, ou mieux encore entre 35 et 45 W.

3. Procédé selon la revendication 1 ou 2, dans lequel ladite étape consistant à appliquer ledit faisceau laser (8) comprend l'étape consistant à effectuer au moins un passage dudit faisceau laser (8) sur ladite surface (2a) le long d'une ligne de travail.

4. Procédé selon la revendication 3, dans lequel ladite étape consistant à appliquer ledit faisceau laser (8) comprend l'étape consistant à effectuer une pluralité de passages dudit faisceau laser (8) sur ladite surface (2a) le long de ladite ligne de travail.

5. Procédé selon la revendication 3 ou 4, dans lequel l'étape consistant à effectuer ledit passage dudit faisceau laser (8) est obtenue en déplaçant ledit faisceau laser (8) à une vitesse comprise entre 50 et 300 mm/s, de préférence entre 100 et 250 mm/s.

6. Procédé selon l'une quelconque des revendications précédentes, comprenant de plus l'étape consistant à réaliser une pluralité de coupes non traversante ou encoches (5) dans ladite surface métallique (2a).

7. Procédé selon l'une quelconque des revendications précédentes, dans lequel ledit faisceau laser (8) comporte une longueur d'onde comprise entre 1 000 et 1 100 nm, ladite longueur d'onde étant, de préférence, comprise entre 1 047 et 1 064 nm.

8. Procédé selon l'une quelconque des revendications précédentes, dans lequel la puissance et/ou le nombre de passages et/ou la durée d'impulsion et/ou la vitesse de déplacement et/ou la course du faisceau laser (8) varient lors de l'étape consistant à effectuer ladite au moins une coupe (5) afin de varier la profondeur de coupe.

9. Procédé selon l'une quelconque des revendications précédentes, dans lequel l'étape consistant à prévoir ladite plaque (2) comprend l'étape consistant à courber ladite plaque (2) de manière à obtenir une forme concave ou convexe ; ladite étape consistant à courber ladite plaque (2) étant, de préférence, effectuée avant l'étape consistant à réaliser ladite coupe non traversante ou encoche (5).

10. Procédé selon l'une quelconque des revendications précédentes, comprenant de plus l'étape consistant à créer une zone de début de déformation (7), de préférence à proximité du centre de la plaque (2).

11. Procédé selon la revendication 10, dans lequel ladite étape consistant à créer la zone (7) de début de déformation est obtenue en retournant localement la concavité de la plaque (2).

12. Procédé selon la revendication 11, dans lequel l'étape consistant à retourner localement la concavité de la plaque (2) est obtenue en appliquant un rayonnement laser à proximité du centre de la plaque (2) de manière à déformer ladite zone.

13. Procédé selon la revendication 10, dans lequel ladite étape consistant à créer la zone de début de déformation (7) est obtenue en modifiant localement la structure cristalline et/ou l'épaisseur de ladite plaque (2) .

14. Procédé selon l'une quelconque des revendications précédentes, comprenant de plus une étape consistant à créer au moins une zone de début de rupture (6) placée au niveau de ladite au moins une coupe non traversante ou encoche (5) ; ladite zone de début de rupture (6) comprenant une partie de plaque comportant une épaisseur inférieure à l'épaisseur moyenne de la plaque (2).

15. Procédé selon la revendication 10, dans lequel ladite étape consistant à créer au moins une zone de début de rupture (6) est obtenue en retirant une partie de la plaque (2) par rayonnement laser.

16. Procédé selon l'une quelconque des revendications précédentes, dans lequel ladite coupe périphérique (5) est de préférence en forme d'arc de cercle et est réalisée à la périphérie d'une partie centrale (4) de ladite plaque (2) ; ladite coupe non traversante ou encoche (5) comportant une première (5a) et une seconde (5b) extrémité se faisant face.

17. Procédé selon la revendication 16, dans lequel ladite coupe non traversante ou encoche (5) comporte une profondeur croissante en s'éloignant desdites première (5a) et seconde (5b) extrémités.
